# FASCICULE DE BREVET EUROPEEN

(11) **EP 0 760 211 B1**
(45) Date de publication et mention de la délivrance du brevet: **07.11.2001**
(21) Numéro de dépôt: 96401877.4
(22) Date de dépôt: 02.09.1996
(51) Int. Cl.: A23C 19/068, A23C 19/16

(54) **Fromage à croute naturelle avec des éléments figurés et procédé pour sa fabrication**
Käse mit natürlicher Rinde und mit figurativen Elementen und Verfahren zu dessen Herstellung
Cheese with natural rind and with figurative elements and process for preparing

(30) Priorité: 04.09.1995 FR 9510352
(43) Date de publication de la demande: 05.03.1997
(73) Titulaire: Société Anonyme des Fermiers Reunis (S.A.F.R.), 94306 Vincennes Cédex (FR)
(72) Inventeur: Pitault, Gilbert, 53170 Meslay du Maine (FR); Gaulier, Jean-Paul, 53210 Soulge sur Ouette (FR)
(74) Mandataire: Le Guen, Gérard

(56) Documents cités:
- EP-A- 0 039 257
- DE-A- 2 623 424
- FR-A- 2 635 950

## Description

L'invention concerne un nouveau produit alimentaire, plus spécifiquement un nouveau fromage ou une nouvelle spécialité fromagère à croûte naturelle, présentant à sa surface des éléments figurés.

Dans la description et les revendications qui suivent, on désignera sous le terme "fromages" aussi bien les produits correspondant à la réglementation fromages fabriqués selon les technologies en vigueur à partir de lait, ou de concentrés protéiques laitiers, provenant de différentes espèces de mammifères, que des spécialités fromagères ou laitières dans lesquelles peuvent être incorporées de la matière grasse ou des protéines d'origine végétale ainsi que des additifs ou agents technologiques autres que les agents coagulants traditionnels.

On entend par "éléments figurés", des éléments solides aux propriétés esthétiques ou organoleptiques, provenant notamment de corps végétaux ou animaux, qui présente une forme visible à l'oeil nu, par exemple des brisures, des éclats, des éléments concassés ou des poudres grossières.

De façon traditionnelle, les fromages sont commercialisés :
- soit sans croûte : ce sont essentiellement le cas des fromages frais ou des fromages fondus et dans ce cas emballés directement dans leur emballage, barquettes ou coquilles d'aluminium ou tout autre emballage approprié. Ils peuvent également se présenter à la vente enrobés par des fruits entiers, ou par des végétaux, des fruits sous forme d'éclats (poivre, noix, noisette, amandes) ou d'autres éléments figurés adaptés. Ces éléments sont posés sur une pâte humide et leur maintien est assuré par un léger enfoncement dans la pâte.
- soit avec un enrobage artificiel superficiel tel que des enduits, des cires naturelles ou de la paraffine : dans cette catégorie, on trouve essentiellement des produits hollandais (Edam, Gouda), certains Cheddar et autres fromages à pâte pressée.

L'enrobage lisse de ces produits ne permet pas la dépose directe d'éléments sur eux ; la dépose d'éléments ne pourrait être assurée dans ce cas que simultanément à la dépose de cire ou d'enduit, c'est-à-dire avant cristallisation de la cire ou lors de l'enduction quand l'enduit est humide, mais cela est difficilement réalisable industriellement.
- soit avec une croûte naturelle obtenue lors des opérations de salage et d'affinage et due au développement au cours de l'étape d'affinage, dans des conditions appropriées, d'une flore superficielle telle que des *Pénicillium, Geotrichum*, levures, microcoques, corynébactéries, etc. : dans cette gamme de produits, on peut citer les principaux fromages à pâte molle (Brie, Camembert), à pâte pressée cuite ou non cuite (Emmental, Cheddar, Cantal), à pâte persillée (Roquefort, Bleu) et une vaste gamme de spécialités fromagères.

Selon le type de germes utilisés comme flore superficielle d'affinage et la nature des traitements effectués au cours du stade d'affinage, on obtient des croûtes naturelles de différents types : par exemple "croûte fleurie" quand la flore de surface est essentiellement composée de moisissures (*Penicil lium,* par exemple), "croûte lavée" quand le produit est lavé au cours de l'affinage afin de faciliter la pousse de certains germes (*Brevibacterium linens*, par exemple) ou "croûte mixte" quand la croûte est ensemencée en germes de différents genres microbiens (moisissures, bactéries, levures).

A l'exception des produits à croûte lavée ou morgée, toutes ces croûtes sont sèches. De ce fait, des éléments figurés déposés sur cette croûte n'adhérent que peu à la surface du fromage, et sont susceptibles d'être éliminés à la moindre manipulation.

Afin de résoudre ce problème, une première alternative a consisté à "laquer" la croûte avant dépose des éléments. Cette technique est utilisée notamment dans le brevet français FR 2 621 529, avec une laque constituée essentiellement d'une dispersion aqueuse stable d'acétate de polyvinyle ou de copolymère à base d'acétate de polyvinyle. Dans ce cas, la flore initiale est éliminée par frottage, la surface du fromage est alors enduite d'une "laque", puis de la farine, grillée de préférence, est plaquée sur cette "laque" encore humide afin de conférer au produit un aspect naturel. Une deuxième pulvérisation de laque peut être effectuée afin de constituer un "voile" sur la farine et améliorer la tenue de la farine. La laque encore humide joue le rôle d'adhésif permettant la fixation des éléments figurés. En dehors du fait que les produits constitutifs des laques d'origine chimique sont pour la plupart non comestibles, obligeant le consommateur à éliminer la croûte, ce procédé nécessite la mise en oeuvre de manipulations complémentaires fastidieuses.

Une deuxième alternative a consisté à déposer des éléments figurés, essentiellement des herbes ou du poivre, sur la croûte à la fin du stade d'affinage, juste avant l'emballage du produit, comme par exemple dans la demande de brevet DE 26 23 424, où des éléments de contraste pouvant se présenter sous forme de particules solides, avantageusement finement divisées, sont déposés à le surface de la croûte d'un fromage suite à l'affinage. Toutefois, les éléments ne peuvent être déposés que sur des surfaces planes car ils sont simplement posés sur la croûte sans y être fixés. On connaît également des produits recouverts d'herbes, de foin mais ces éléments sont posés sur le produit affiné comme éléments de conservation ou de décoration et n'étant ni fixés ni incrustés sur la croûte, ils sont éliminés par simple frottage.

En conclusion, on ne connaît pas de produit fromager ayant une croûte séchée et présentant à sa surface des éléments figurés qui restent durablement à la surface du produit, que cette surface soit pleine ou non, sans l'intervention d'un agent de fixation chimique. L'invention a pour but de remédier à cette carence.

Dans le cadre de la présente invention, la Demanderesse a montré que cette étape d'application de "laque" n'est pas indispensable à la bonne tenue d'éléments figurés sur une croûte naturelle séchée et que l'on peut ainsi présenter à la consommation des nouveaux fromages dont la croûte est constituée uniquement de l'association d'une flore d'affinage et d'éléments figurés de dimensions variables incrustés dans ladite flore.

A cet effet, l'invention a pour objet un fromage à croûte naturelle, fleurie ou mixte, séchée, présentant des éléments figurés répartis de manière non continue à la surface du fromage, caractérisé en ce que la croûte est formée d'un réseau filamenteux, créé par le développement d'une flore superficielle d'affinage, réseau dans lequel lesdits éléments figurés sont incrustés au moins partiellement.

En effet, la Demanderesse a démontré que des germes d'affinage qui se développent en produisant un réseau filamenteux sont capables, lorsqu'ils sont amenés à se développer à la surface d'un fromage en présence d'éléments figurés, d'assurer le maintien desdits éléments figurés par incrustation de ces derniers dans les interstices du réseau filamenteux.

De façon plus précise, la présente invention concerne donc des fromages présentant une croûte sèche formée par le développement de micro-organismes filamenteux appartenant essentiellement à la famille des moisissures ; elle concerne des fromages à croûte naturelle, fleurie ou mixte, dans la mesure où les moisissures sont associées à d'autres genres microbiens (bactéries, levures).

L'invention concerne tous les fromages à croûte naturelle, fleurie ou mixte, séchée, obtenus par les procédés technologiques connus de l'homme du métier comprenant notamment des étapes de maturation, éventuellement de traitement thermique, éventuellement de standardisation du lait en protéines et matières grasses, de gélification par les différents moyens connus (ajout d'agents acidifiants notamment de ferments lactiques, de glucono-delta-lactone ou agents similaires, ou d'enzymes coagulantes, notamment de présure ou produits similaires), d'élimination de lactosérum, de moulage, égouttage, éventuellement pressage puis salage.

Dans le cadre de l'invention, le stade important de l'élaboration du fromage est l'affinage où se développe une flore d'affinage à la surface de la croûte du fromage, cette flore étant appliquée à la surface du caillé avant l'affinage.

Est conforme à l'invention tout fromage dont la flore superficielle se développe en formant un réseau filamenteux, se présentant sous la forme de thalles duveteux, "feutrants", du type des croûtes fleuries.

Selon les qualités organoleptiques du produit que l'on veut obtenir, on cherchera à développer une seule souche pour la flore superficielle d'affinage, ou bien un mélange, mais pour la réalisation de l'invention au moins une des souches utilisées doit présenter un caractère filamenteux.

Parmi les espèces les plus connues et les plus utilisées en fromagerie possédant ces propriétés, on peut citer les *Penicillium*, aptes à donner des thalles floconneux à prédominance blanche caractéristiques du "feutrage blanc" des camemberts ou brie, notamment *Penicillium Camemberti*, *Penicillium Album, Penicillium Cyclopium* et tout autre *Penicillium*, les *Geotrichum* (notamment *Geotrichum Candidum* essentiellement du type 3), les *Fusarium* et *Aspergillus* non pathogènes.

Ces microorganismes sont utilisés traditionnellement comme flore superficielle d'affinage de fromage auxquels ils confèrent leur aspect naturel par création de "feutrine" sur la croûte. On peut citer à titre d'exemples les pâtes molles (Camembert, Brie), les pâtes pressées...

Bien entendu, cette liste n'est pas limitative et toute espèce non pathogène apte à se développer sur un caillé en produisant un réseau filamenteux est adaptée à la présente invention.

Avantageusement, la flore comprend au moins un germe développant un réseau filamenteux, éventuellement en association avec tout autre microorganisme pouvant être utilisé en fromagerie.

Par exemple, la flore peut dériver d'une seule souche à caractère "filamenteux" comme le *Geotrichum,* d'un mélange de souches à caractère "filamenteux", comme un mélange *Geotrichum/Penicillium*, ou d'un mélange de souches filamenteuses et non-filamenteuses, comme un mélange *Geotrichum/Brevibacterium linens*, selon les caractéristiques de goût, d'arômes et de pigmentation que l'on veut conférer au fromage.

Selon l'invention, la surface du fromage présente des éléments figurés, qui sont apposés sur la croûte avant ou pendant le développement de la flore d'affinage, pour y être finalement incorporés soit dans la totalité de leur volume, soit en partie seulement, c'est-à-dire qu'ils dépassent de la surface du réseau développé par la flore d'affinage superficielle.

A cet effet, tout élément figuré de forme et de dimensions adaptées pour être incorporé dans un réseau filamenteux de flore d'affinage convient à l'invention.

De préférence, ces éléments sont de forme essentiellement irrégulière, pas nécessairement figuratives, par exemple il peut s'agir de brisures, d'éclats, d'éléments concassés ou hachés, de poudres grossières, de brins , filaments, brindilles, etc..

Pour conférer un aspect attrayant, ces éléments sont visibles à l'oeil nu et présentent avantageusement une taille supérieure à 0,1 mm dans toutes les dimensions. Toutefois, des élément figurés visibles à l'oeil nu peuvent aussi être présents en association avec d'autres éléments non visibles à l'oeil nu.

Pour permettre une incorporation tenace des éléments, ces derniers ont de préférence au moins une dimension inférieure à 0,1 mm pour s'insérer au mieux dans des interstices du réseau filamenteux. Des éléments en forme de brins pourront atteindre une longueur relativement importante, par exemple 10 cm. Des brisures auront notamment une dimension maximale de 2 à 3 cm.

Les éléments figurés peuvent être utilisés à des fins organoleptiques pour conférer un goût particulier au fromage. A cet effet, ils proviennent avantageusement de corps végétaux ou animaux comestibles.

Des éléments comestibles peuvent être utilisés sous une forme quelconque adaptée pour s'incorporer dans le réseau filamenteux de la croûte, notamment sous forme hachée, effilée, concassée, granulée ou extrudée.

Les éléments figurés selon l'invention seront avantageusement constitués de céréales concassées ou extrudées ou sous forme de flocons (blé, maïs, orge), ou encore constitués de brisures de noix, d'amandes, de végétaux, de fruits secs, voire de graines de poivre ou autre aromate. Ils peuvent également être constitués par dès brins d'algues, des germes de soja, du hachis de jambon, de surimi, de morceaux de fromages, etc... On pourra utiliser un seul type d'éléments figurés ou un mélange harmonieux de différents types. Cette liste n'est pas limitative du type d'éléments figurés pouvant être utilisés dans la mesure où ces derniers sont comestibles et compatibles avec les qualités organoleptiques du fromage. Les éléments peuvent être également grillés avantageusement pour des raisons organoleptiques ou de présentation (couleur).

La croûte peut également avantageusement comprendre des éléments figurés en mélange avec de la chapelure. Le pourcentage de chapelure dans le mélange sera avantageusement compris entre 0 et 80 %.

Les éléments figurés sont répartis de façon non continue à la surface du fromage, c'est-à-dire que la surface du fromage peut être divisée en une surface occupée par la flore d'affinage et une surface occupée par les éléments figurés. L'aire de la surface occupée par les éléments figurés est définie par la suite comme l'aire de la coupe desdits éléments le long de la surface du fromage. De façon avantageuse, le rapport de répartition correspondant au rapport de l'aire de la surface occupée par la flore d'affinage à l'aire de la surface occupée par les éléments figurés, est de 20/80 à 80/20. Ce rapport de répartition peut se situer en dehors de cette gamme préférée tant que l'incorporation, même partielle, des éléments figurés au sein du réseau filamenteux assure une bonne tenue de ces derniers.

La proportion d'éléments figurés superficiels par rapport au poids total du fromage est de préférence de 0,1 à 20 %.

L'invention a également pour objet un procédé pour la fabrication d'un fromage tel que décrit précédemment. Ce procédé est caractérisé en ce qu'il comprend les étapes consistant à :
(i) gélifier et/ou coaguler une matière première protéique à base de protéines laitières, éventuellement égoutter, et saler la matière protéique gélifiée et/ou coagulée,
(ii) ensemencer la surface de la matière protéique gélifiée et/ou coagulée, avec une flore d'affinage apte à former un réseau filamenteux,
(iii) éventuellement préaffiner la matière protéique ensemencée dans des conditions permettant le développement préliminaire d'un réseau filamenteux de flore d'affinage superficielle,
(iv) répartir les éléments figurés de façon non continue à la surface de la matière protéique ensemencée, éventuellement préaffinée,
(v) affiner la matière protéique sur laquelle ont été répartis les éléments figurés, dans des conditions permettant le développement superficiel d'un réseau filamenteux de flore d'affinage qui enserre peu à peu, au moins partiellement, les éléments figurés.

La matière protéique à base de protéines laitières peu être simplement du lait, standardisé ou non en matières grasses et en protéines, traité thermiquement ou non, ou bien un concentré protéique laitier, ou bien un mélange de lait ou de concentré protéique laitier avec d'autres ingrédients alimentaires, notamment des concentrés protéiques d'origine non laitière, par exemple végétale.

Pour l'obtention d'un concentré protéique laitier, on peut utiliser la technique d'ultrafiltration telle qu'elle est décrite dans le brevet N° FR 2 052 121, ou toute autre technique de préparation de concentré protéique laitier.

L'étape de gélification et/ou coagulation est effectuée de façon connue sous l'action de processus physico-chimiques conduisant à la dénaturation des substances protéiques sous l'action d'agents physiques, chimiques ou biologiques (température, acides, enzymes) ou sous l'action d'enzymes coagulantes, notamment la présure, d'agents acidifiants (acide lactique, ferments lactiques, glucono-delta-lactone...) ou d'agents gélifiants et texturants (gommes, gélatine,...), ou d'un traitement thermique.

Tout autre moyen d'obtention de gel laitier dont la composition finale est celle du produit souhaité rentre dans le cadre de l'invention.

En outre, on peut également rajouter dans le coagulum de façon classique à l'étape de gélification ou à toute autre étape de la fabrication, des éléments figurés, des agents d'aromatisation, des colorants et tout élément comestible souhaité pour conférer des caractéristiques organoleptiques particulières au produit. On peut citer à titre d'exemple l'ajout de poivre, d'aromates, herbes, éclats de noix, de céréales, etc... Le taux d'incorporation de ces éléments sera compris entre 0,5 et 15 %.

De façon préférentielle, le fromage obtenu sera caractérisé avant affinage par un extrait sec compris entre 25 et 70 % et le taux de matière grasse sur extrait sec compris entre 0 et 80 %.

Le procédé peut comprendre, outre l'égouttage et le salage après la gélification/coagulation, des étapes classiques d'élimination de lactosérum, de moulage, de pressage et de ressuyage.

L'étape de salage est importante pour la réalisation de l'invention, en ce sens que c'est au cours de cette étape que commence à se former une croûte à la superficie du fromage qui permet le développement de la flore et la dépose d'éléments.

De préférence, l'ensemencement à l'étape (ii) se fait par voie humide, par exemple par vaporisation dans un véhicule aqueux, pour permettre un meilleur accrochage des éléments figurés.

Le dépôt des éléments figurés sur la flore superficielle peut se faire, soit au tout premier stade de développement de la flore désirée, après l'ensemencement superficiel (ii), alors que le réseau filamenteux ne s'est pas encore formé, soit après une étape (iii) de préaffinage pendant un temps suffisant de façon à ce que se créé un début de réseau filamenteux, les éléments figurés étant déposés à l'aide d'une légère pression sur la superficie présentant un début de réseau. Ensuite, (étape v) on laisse le produit en hâloir pendant un temps suffisant à un bon développement d'un réseau dense, de façon à ce que les filaments du réseau emprisonnent les éléments figurés qui sont ainsi maintenus à la superficie du fromage. A titre d'exemple, un fromage de type format à la pièce ensemencé en *Geotrichum* sera affiné pendant une à deux semaines.

L'opération de l'étape (iv) consiste à déposer sur la flore superficielle, présentant éventuellement un début de réseau, les éléments figurés, de façon non continue, c'est-à-dire en ménageant des espaces libres entre les éléments figurés.

Afin d'éviter toute contamination du produit par les éléments figurés, ces derniers seront avantageusement décontaminés avant emploi par tout moyen approprié (stérilisation, gaz, vapeur, irradiation).

La dépose d'éléments figurés simples ou en mélange, par exemple dans de la chapelure, peut se faire aisément par légère pression à la superficie du fromage.

Les éléments figurés seuls ou mélangés à de la chapelure peuvent être plaqués sur la surface ensemencée du fromage par tout moyen approprié. On peut notamment procéder par enrobage partiel du fromage, par exemple au moyen d'enrobeuses de la société FRICOSCANDIA EQUIPMENT.

Tout autre moyen approprié permettant la dépose des éléments par placage est utilisable.

Les opération de préaffinage (iii) et d'affinage (v) sont effectuées de manière connue dans des conditions permettant le développement de la flore superficielle sous forme d'un réseau filamenteux.

La durée de chacune des opérations peut être déterminée de façon classique pour l'homme du métier, notamment en fonction des qualités organoleptiques souhaitées pour le fromage.

La durée de l'opération (v) doit être suffisante pour réaliser une incorporation, même partielle, tenace des éléments figurés, c'est-à-dire que ceux-ci doivent rester solidaires de la croûte en dépit de toute manipulation du fromage.

Par le procédé de l'invention, l'homme du métier peut créer une gamme infinie d'associations, de présentations et de goûts en jouant sur le type de flore et d'éléments figurés mis en oeuvre.

En outre, la combinaison des éléments du fromage et d'éléments figurés comestibles, notamment si ces derniers sont constitués de céréales riches en fibres, apporte un avantage nutritionnel de première importance par la complémentarité des nutriments apportés. De plus, les produits présentent en bouche des textures nouvelles par le contraste entre les textures plus ou moins croquante de la croûte et molle de la pâte, donc tout à fait nouvelles et originales.

Un avantage important conféré par l'invention réside en la comestibilité totale de la croûte par rapport au produit utilisant une laque "chimique" comme support des éléments.

Les fromages obtenus peuvent être de différentes formes (cylindriques, cubiques, parallélépipédiques, coniques, sphériques, triangulaires, etc...) et de différents grammages. Leur aspect visuel sera remarquable et nouveau, en ce sens que la croûte est formée par des incrustations d'éléments figurés plus ou moins grossières dans une "feutrine" microbienne, avantageusement selon le rapport de répartition de 20/80 à 80/20.

Le produit affiné peut être emballé selon les modes traditionnels en fromagerie et commercialisé dans les circuits appropriés.

L'invention sera décrite à l'aide des exemples ci-après donnés à titre illustratif.

### EXEMPLES

### EXEMPLE 1

A du lait de vache, standardisé à 35 g/l de matière grasse, pasteurisé à 72°C pendant 30 secondes, on ajoute une quantité de 15 à 20 mg/100 1 de présure de force 1/10 000 et on laisse coaguler.

Après coagulation, on sépare le caillé du lactosérum ; le caillé est ensuite moulé pour obtenir un produit final cylindrique d'environ 200 g, mis à égoutter, salé, ressuyé et démoulé. On vaporise alors la surface du produit avec une dispersion aqueuse contenant la flore superficielle d'affinage composée de souches appartenant aux espèces *Geotrichum Candidum* et *Penicillium Candidum.* Le produit obtenu a un extrait sec de 50 % et un gras sur sec de 40 %.

On passe les produits sous une enrobeuse de marque FRICOSCANDIA EQUIPMENT qui vient déposer par placage à la surface du produit, un mélange de flocons de céréales grillées et de germes de blé dans une proportion de 10 % par rapport au poids du produit, dans un rapport de répartition flore/céréales de 20/80.

Les produits sont alors mis en hâloirs aérés à 13-15°C et 90 % d'humidité relative afin de permettre le développement du réseau filamenteux de la flore d'affinage et l'apparition d'un duvet blanc sur la superficie à partir du 5ème jour, où il y a une pousse suffisante des *Geotrichum* et du *Penicillium* pour emprisonner les flocons de céréales.

Après une dizaine de jours, les produits sont retirés du hâloir et emballés dans un film cellulosique et placés dans une boîte.

Le produit final est remarquable en ce sens qu'il présente une croûte naturelle constituée par une association de "feutrine" blanche et de "flocons et éclats" de céréales bruns/ocres dans un rapport superficiel 20/80, ce qui lui conférera au moment de la consommation une texture en bouche présentant un contraste croquant/mou.

### EXEMPLE 2

Un lait de fromagerie standardisé en matière grasse à 35 g/l et pasteurisé (72°C/3 secondes) est passé sur une membrane d'ultrafiltration pour obtenir un concentré protéique (cinq fois concentré) après élimination de l'eau et du lactose.

On rajoute au concentré obtenu une quantité de 10 à 15 mg/100 l de présure et 5 % de brisures de noix et d'amandes et on laisse coaguler le concentré.

On obtient un caillé égoutté contenant des céréales que l'on moule dans des moules paralléllépipédiques de façon à obtenir des produits ayant un poids de 50 g. On démoule et on saumure le fromage ; on ensemence ensuite par vaporisation de la superficie du produit par une flore d'affinage constituée de l'association de *Geotrichum Candidum*, *Penicillium Camemberti* et *Brevibacterium linens,* ce dernier conférant au produit une pigmentation rouge/orangé. Le produit a un extrait sec de 60 % et un gras sur sec de 55 %.

Les produits sont passés sous une enrobeuse FRICOSCANDIA EQUIPMENT qui dépose par légère pression à la surface du produit, un mélange de brisures de fromages secs, de graines de sésame, de tournesol et de chapelure dans les proportions pondérales 1/4, 1/4, 1/4, 1/4.

Les produits sont alors mis en hâloir à 13-15°C et 90 % d'humidité relative pendant une semaine, puis emballés sous film de cellophane et regroupés par 4 dans un étui pour commercialisation.

Les produits présentent un croûtage composé d'une flore d'affinage blanche/orangé dans laquelle s'enchevêtre le mélange à base de graines dans un rapport superficiel 30/70.

A la consommation, on obtient un contraste de texture croquante/molle agréable en bouche.

## Revendications

1. Fromage à croûte naturelle, séchée, fleurie ou mixte, présentant des éléments figurés répartis de manière non continue à la surface du fromage, **caractérisé en ce que** la croûte est formée d'un réseau filamenteux, créé par le développement d'une flore superficielle d'affinage, réseau dans lequel lesdits éléments figurés sont incrustés au moins partiellement.

2. Fromage selon la revendication 1, **caractérisé en ce que** la flore comprend au moins un germe développant un réseau filamenteux, éventuellement en association avec au moins un autre germe.

3. Fromage selon la revendication 2, **caractérisé en ce que** la flore comprend au moins un germe choisi parmi les espèces *Geotrichum*, *Pénicillium, Fusarium* et *Aspergillus* non pathogènes.

4. Fromage selon l'une quelconque des revendications précédentes, **caractérisé en ce que** les éléments figurés sont de forme essentiellement irrégulière.

5. Fromage selon l'une quelconque des revendications précédentes, **caractérisé en ce que** les éléments figurés ont une taille supérieure à 0,1 mm dans toutes les directions.

6. Fromage selon l'une quelconque des revendications précédentes, **caractérisé en ce que** les éléments figurés ont une longueur inférieure à 10 cm.

7. Fromage selon l'une quelconque des revendications précédentes, **caractérisé en ce que** les éléments figurés proviennent de corps végétaux ou animaux comestibles.

8. Fromage selon l'une quelconque des revendications précédentes, **caractérisé en ce que** les éléments figurés sont sous forme hachée, effilée, concassée, granulée ou extrudée.

9. Fromage selon la revendication 8, **caractérisé en ce que** les éléments figurés sont à base de céréales concassées.

10. Fromage selon la revendication 7, **caractérisé en ce que** les éléments figurés sont un mélange de chapelure et d'autres éléments comestibles.

11. Fromage selon l'une quelconque des revendications précédentes, **caractérisé en ce que** les éléments figurés sont répartis à la surface du fromage de telle sorte que le rapport entre la surface occupée par la flore d'affinage et la surface occupée par les éléments figurés est de 20/80 à 80/20.

12. Fromage selon l'une quelconque des revendications précédentes, **caractérisé en ce que** les éléments figurés sont présents à raison de 0,1 à 20 % du poids du fromage.

13. Procédé de fabrication d'un fromage selon l'une quelconque des revendications précédentes, **caractérisé en ce qu'**il comprend les étapes consistant à :
(i) gélifier et/ou coaguler une matière première protéique à base de protéines laitières, éventuellement égoutter, et saler la matière protéique gélifiée et/ou coagulée,
(ii) ensemencer la surface de la matière protéique gélifiée et/ou coagulée, avec une flore d'affinage apte à former un réseau filamenteux,
(iii) éventuellement préaffiner la matière protéique ensemencée dans des conditions permettant le développement préliminaire d'un réseau filamenteux de flore d'affinage superficielle,
(iv) répartir les éléments figurés de façon non continue à la surface de la matière protéique ensemencée, éventuellement préaffinée,
(v) affiner la matière protéique sur laquelle ont été répartis les éléments figurés, dans des conditions permettant le développement superficiel d'un réseau filamenteux de flore d'affinage qui enserre peu à peu, au moins partiellement, les éléments figurés.

14. Procédé selon la revendication 13, **caractérisé en ce que** l'ensemencement (ii) se fait par vaporisation dans un véhicule aqueux.

15. Procédé selon l'une quelconque des revendications 13 ou 14, **caractérisé en ce que** les éléments figurés sont décontaminés avant l'étape (iii).

16. Procédé selon l'une quelconque des revendications 13 à 15, **caractérisé en ce que** les éléments figurés sont répartis de façon non continue à la surface de la matière protéique par simple placage en surface, notamment par une technique d'enrobage.

## Claims

1. Cheese with a natural rind, dried, flowered or mixed, with figurative elements spread non continuously at the surface of the cheese, **characterised by** the fact that the rind is formed of a network of filaments, created by the development of surface maturing flora, a network in which the said figurative elements are at least partially inlaid.

2. Cheese according to Claim 1, **characterised by** the fact that the flora includes at least one germ developing a network of filaments, possibly in association with at least one other germ.

3. Cheese according to Claim 2, **characterised by** the fact that the flora includes at least one germ selected from among the non pathogenic species *Geotrichum*, *Penicillium, Fusarium* and *Aspergillus*.

4. Cheese according to any of the preceding claims, **characterised by** the fact that the figurative elements are in an essentially irregular form.

5. , Cheese according to any one of the preceding claims, **characterised by** the fact that the figurative elements are larger than 0.1 mm in all directions.

6. Cheese according to any one of the preceding claims, **characterised by** the fact that the figurative elements are less than 10 cm in length.

7. Cheese according to any one of the preceding claims, **characterised by** the fact that the figurative elements originate from edible vegetable or animal matter.

8. Cheese according to any one of the preceding claims, **characterised by** the fact that the figurative elements are in a chopped, tapered, crushed, granulated or extruded form.

9. Cheese according to Claim 8, **characterised by** the fact that the figurative elements are crushed cereal based.

10. Cheese according to Claim 7, **characterised by** the fact that the figurative elements are a mixture of dried bread-crumbs and other edible ingredients.

11. Cheese according to any one of the preceding claims, **characterised by** the fact that the igurative elements are distributed at the surface of the cheese in such a way that the ratio between the surface taken up by the maturing flora and the surface taken up by the figurative elements is from 20:80 to 80:20

12. Cheese according to any one of the preceding claims, **characterised by** the fact that the figurative elements are present at the rate of 0.1 to 20% of the weight of the cheese.

13. A process for making a cheese according to any one of the preceding claims, **characterised by** the fact that it comprises stages consisting of:
(i) gelling and/or coagulating a proteinic raw material based on dairy proteins, possibly draining and salting the gelled and/or coagulated proteinic matter;
(ii) culturing the surface of the gelled and/or coagulated proteinic matter with maturing flora suitable for forming a network of filaments;
(iii) possibly prematuring the cultured proteinic matter under conditions which allow the preliminary development of a network of filaments of surface maturing flora;
(iv) distributing the figurative elements non continuously at the surface of the cultured, and possibly prematured, proteinic matter;
(v) maturing the proteinic matter on which the figurative elements have been distributed, under conditions which allow surface development of a network of filaments of maturing flora which gradually tightly holds the figurative elements, at least partly.

14. A process according to Claim 13, **characterised by** the fact that the culturing (ii) is done by vaporising in an aqueous vehicle.

15. A process according to either one of the Claims 13 or 14, **characterised by** the fact that the figurative elements are decontaminated before stage (iii).

16. A process according to any one of the Claims 13 to 15, **characterised by** the fact that the figurative elements are distributed non continuously at the surface of the proteinic matter by simple surface-laying, particularly by means of a coating technique.

## Patentansprüche

1. Käse mit natürlicher, getrockneter, florierender oder gemischter Rinde, der figurative Elemente aufweist, die unregelmäßig auf der Käseoberfläche verteilt sind, **dadurch gekennzeichnet, daß** die Rinde durch ein faseriges Netz gebildet wird, welches durch die Entwicklung einer Veredelungsflora an der Oberfläche entsteht, wobei in dem Netz die genannten figurativen Elemente zumindest teilweise eingeprägt sind.

2. Käse gemäß Anspruch 1, **dadurch gekennzeichnet, daß** die Flora mindestens einen Keim enthält, der ein faseriges Netz entwickelt, eventuell in Kombination mit mindestens einem weiteren Keim.

3. Käse gemäß Anspruch 2, **dadurch gekennzeichnet, daß** die Flora mindestens einen Keim der nicht pathogenen Species *Geotrichum, Penicillium, Fusarium* und *Aspergillus* enthält.

4. Käse gemäß einem der vorangehenden Ansprüche, **dadurch gekennzeichnet, daß** die figurativen Elemente im wesentlichen von unregelmäßiger Form sind.

5. Käse gemäß einem der vorangehenden Ansprüche, **dadurch gekennzeichnet, daß** die figurativen Elemente eine Größe haben, die größer als 0,1 mm in jeder Richtung ist.

6. Käse gemäß einem der vorangehenden Ansprüche, **dadurch gekennzeichnet, daß** die figurativen Elemente eine Länge von weniger als 10cm haben.

7. Käse gemäß einem der vorangehenden Ansprüche, **dadurch gekennzeichnet, daß** die figurativen Elemente aus eßbarem pflanzlichen oder tierischen Material bestehen.

8. Käse gemäß einem der vorangehenden Ansprüche, **dadurch gekennzeichnet, daß** die figurativen Elemente von gehackter, feinfaseriger, grobzerkleinerter, gekörnter oder extrudierter Art sind.

9. Käse gemäß Anspruch 8, **dadurch gekennzeichnet, daß** die figurativen Elemente auf gekörntem Getreide basieren.

10. Käse gemäß Anspruch 7, **dadurch gekennzeichnet, daß** die figurativen Elemente eine Mischung aus abgeriebener Brotkruste und anderen eßbaren Bestandteilen sind.

11. Käse gemäß einem der vorangehenden Ansprüche, **dadurch gekennzeichnet, daß** die figurativen Elemente derart auf der Käseoberfläche verteilt sind, daß das Verhältnis zwischen der von der Veredelungsflora besetzten Fläche und der von den figurativen Elementen besetzten Fläche einem Verhältnis von 20/80 bis 80/20 entspricht.

12. Käse gemäß einem der vorangehenden Ansprüche, **dadurch gekennzeichnet, daß** die figurativen Elemente einen Anteil von 0,1 bis 20% am Gewicht des Käses haben.

13. Verfahren zum Herstellen eines Käses gemäß einem der vorangehenden Ansprüche, **dadurch gekennzeichnet, daß** es die folgenden Schritte umfaßt, die bestehen aus:
(i) Gelieren und/oder Koagulieren eines Eiweißrohmaterials aus Milcheiweiß, eventuelles Abtropfenlassen, und Salzen des gelierten und/oder koagulierten Eiweißmaterials,
(ii) Ansetzen der Oberfläche des gelierten und/oder koagulierten Eiweißmaterials mit einer Veredelungsflora, welche ein faseriges Netz bilden kann,
(iii) eventuell vorab Veredeln des angesetzten Eiweißmaterials unter Bedingungen, welche die vorläufige Bildung eines faserigen Netzes aus Veredelungsflora an der Oberfläche erlauben,
(iv) ungleichmäßiges Verteilen der figurativen Elemente an der Oberfläche des angesetzten, eventuell vorab veredelten Eiweißmaterials,
(v) Veredeln des Eiweißmaterials, auf welchem die figurativen Elemente verteilt wurden, unter Bedingungen, welche an der Oberfläche die Ausbildung eines faserigen Netzes aus Veredelungsflora erlauben, welches nach und nach zumindest teilweise die figurativen Elemente umschließt.

14. Verfahren gemäß Anspruch 13, **dadurch gekennzeichnet, daß** das Ansetzen (ii) durch Verdampfen in einem wäßrigen Träger geschieht.

15. Verfahren gemäß einem der Ansprüche 13 oder 14, **dadurch gekennzeichnet, daß** die figurativen Elemente vor dem Schritt (iii) entgiftet werden.

16. Verfahren gemäß einem der Ansprüche 13 bis 15, **dadurch gekennzeichnet, daß** die figurativen Elemente ungleichmäßig an der Oberfläche des Eiweißmaterials durch einfaches Verkleiden der Oberfläche, insbesondere durch Ummantelungstechnik, verteilt werden.
